# EUROPEAN PATENT APPLICATION

(11) **EP 4 628 365 A1**
(43) Date of publication of application: **08.10.2025**
(21) Application number: 25382192.0
(22) Date of filing: 04.03.2025
(51) Int. Cl.: B60R 13/02, B60R 22/24

(54) **FINISH PANEL FOR A VEHICLE PILLAR, PILLAR ASSEMBLY COMPRISING IT AND METHOD OF ASSEMBLY**

(30) Priority: 05.03.2024 ES 202430160
(71) Applicant: Seat, S.A., 08760 Martorell - Barcelona (ES)
(72) Inventor: REINA JIMÉNEZ, Remigio, 08760 Martorell (ES)
(74) Representative: Elzaburu S.L.P.

(57) **Abstract**

The present invention refers to a finish panel for a pillar of a vehicle comprising a holding mean (10) configured to contact and retain a strap (201) of a seat belt system (200) during the sliding movement of said strap (201) with respect to the finish panel when said strap (201) is being rolled up or unrolled, a vehicle pillar assembly comprising said finish panel and a method of mounting the finish panel.

## Description

### Technical field of the invention

The present invention is in the field of automotive engineering. Specifically, it refers to a finish panel for a vehicle pillar and a pillar assembly comprising it.

### Background of the invention

The seat belt is an accessory designed to keep the driver and passengers of a vehicle fastened to their seats in such a way that, in the event of a collision, they are not thrown against the structures of the passenger compartment.

The seat belt consists of a system made up of two or more straps of resistant fabric of adequate length, fixed to suitable anchors in the body. The straps can be adjusted by the user so that the length of the strap can be adapted to the user being restrained.

To do this, the seat belt system has an automatic winding mean mechanism or retractor. This retractor allows the strap to be slowly displaced, but has a locking device that uses inertia to activate in the event of sudden braking or deceleration of the vehicle.

One of the most widespread configurations of the seat belt system in vehicles is the one located on a pillar (pillar B, pillar C, etc.). More specifically, we can highlight the use of a three-point configuration, where the strap of the system holds the abdominal area (two points of attachment to the floor) and diagonally, holding the thorax transversally (one point of attachment to the floor and another on the pillar, at a height above the shoulder of the user to be held).

Current developments in three-point seat belt systems have one end anchored to the floor or to the lower area of a pillar, and a portion of strap visible up to the anchorage point on the pillar, where there is an upper anchor, and a second end connected to the retractor. In addition, the retractor can be concealed by placing it between the body and the finish panel of the vehicle and arranging it in the lower part of the pillar, where there is more space to contain the excess rolled-up strap.

This configuration has a drawback, as the strap of the seat belt system must run freely vertically along the pillar. The clearance needed to allow the strap to move, together with the concavity towards the lower part of the vehicle interior present in the pillar, cause the strap to tend to move away from the vehicle body and towards the internal face of a pillar finish panel.

However, the lack of visibility during the installation of the finish panel can lead to the strap being clipped incorrectly. We understand clipping of the strap to be the process of the strap being fixed incorrectly due to the connecting means, generally in the form of a clip, existing on the finish panel during the assembly of said finish panel to the body. This incorrect fastening blocks the displacement of the strap in its winding or unwinding movement.

Currently, there are solutions where an additional part, known as a redirect, is incorporated into the body. This redirect defines a free space where the seat belt system strap is inserted, limiting the displacement of the strap, and avoiding its clipping or incorrect fastening during the installation of the pillar.

The additional part needs to be incorporated during the installation of the seat belt system. In other words, current solutions require not only an additional part, with its corresponding manufacturing, but an extra step in the assembly line of the finish panel in the vehicle, corresponding to the installation of this additional part to the body of the pillar.

This requirement leads to significant and costly delays in vehicle assembly lines, as it requires the incorporation, or at least pre-assembly, of the seat belt system prior to the incorporation of the additional part into the body.

It is therefore desirable to have a new design for the finish panel that makes it easier and safer to install a pillar that includes a seat belt system, as well as ensuring that the seat belt system functions correctly and does not deteriorate during its useful life, avoiding the problems that exist with devices in the state of the art.

### Explanation of the invention

The object of the present invention is to provide a solution for the interior finish panel of a vehicle pillar that overcomes the problems encountered during its assembly on the vehicle body.

Specifically, a first aspect of the present invention relates to the interior finish panel of a vehicle pillar.

The finish panel according to the present solution comprises an outer face and an internal face. The outer face is understood to be the surface of the finish panel as seen by a user of the vehicle from the interior compartment when the finish panel is in its assembled position. On the other hand, the internal face is understood to be the surface of the finish panel not seen in said assembled position

This internal face includes connecting means configured to retain the finish panel to a pillar body of the vehicle. These connecting means include a first and second turret configured to retain fixing clips for mechanical attachment to the body. A fixing turret is a body in the form of a protrusion, which moves the position of the clip away from the internal surface of the finish panel.

Additionally, the finish panel according to the present solution comprises a holding mean configured to contact and retain a strap of a seat belt system during the sliding movement of said strap with respect to the finish panel when the strap is being rolled or unrolled.

The holding mean is arranged on the internal face, between the first and second turret. This holding mean comprises, in turn, a contact rail and a threading mean.

The contact rail is arranged adjacent to the internal face of the finish panel between the first and second turrets. This contact rail is configured to make contact with the seat belt system strap during its displacement movement, thus facilitating the sliding of the strap during winding or unwinding.

For its part, the threading means comprises a first and a second protrusion arranged, respectively, on the first and second turret, facing each other. These first and second protrusions extend towards the opposite turret, arranged separately from the internal face of the finish panel. I.e., a retention space is generated between said first and second protrusions and the contact rail, intended to contain the strap, at least a transversal portion thereof. Additionally, the threading means presents an access arranged between said first and second protrusions configured to introduce the strap into the retention space, where it is retained by the presence of the first and second protrusions. The main function of said threading mean is that, during the operation of mounting the finish panel to the body, that is to say, during the handling and displacement of approximation of the finish panel with respect to the body, the strap of the safety system is correctly positioned with respect to the finish panel, at least in the area of said holding mean. This ensures that, once the finish panel is in the assembly position, the contact rail is the only point of contact between the strap and the finish panel.

In addition, the holding means and the first and second turrets form a single body with the finish panel, obtained, for example, from a plastic injection process.

In a second aspect of the invention, the solution relates to a vehicle pillar assembly. This assembly comprises a pillar body, a finish panel according to the present invention, configured to cover the pillar body, and a seat belt system. The seat belt system in turn comprises a strap, a retractor, and an upper anchor. The retractor is configured to wind and unwind the strap and is arranged in a lower area of the pillar, while the upper anchor is configured to guide the sliding of the strap and is arranged in an upper area of the pillar.

For its part, the holding mean is arranged in the finish panel so that its position is between the retractor and the upper anchor of the seat belt system.

Finally, in a third aspect of the invention, the solution refers to a method of mounting a finish panel on a pillar. This mounting method comprises the following stages:
- placing a finish panel with its internal face facing the body of a pillar,
- inserting the strap through the access so that the strap is retained in the retention space by the holding means of the finish panel, and
- attaching the finish panel to the body of the pillar.

The presence of a holding mean as described above allows the forwarding or holding mean to be integrated into the pillar finish panel itself. This makes it possible to define the safety space necessary for the strap, where the seat belt system strap can move freely without the risk of it being clipped during the assembly and/or use of the seat belt system.

In this way, a user can insert the strap into the retention space generated prior to joining the finish panel to the body of the pillar. I.e., the user of this finish panel can position the strap in the retention space with full visibility and be certain that the strap will not interact during the joining of the finish panel to the body, where the user's visibility is reduced.

Therefore, unlike the known solutions in the state of the art, the present invention modifies the assembly process by preventing the strap from coming into contact with other elements of the finish panel, such as sharp elements, edges or stiffening elements of the panel, during the assembly and/or use of the belt without the need for the use and installation of an additional part. This implies a modification of the assembly process, since it allows the belt to be already mounted on the body of the pillar before positioning or fixing the finish panel, which translates into a significant improvement in the process of vehicle assembly by a user.

In the figures of the present invention, reference is made to the following set of elements:
- 100.: Finish panel
- 101.: Outer face
- 102.: Internal face
- 103.: Connecting means
- 200.: Seat belt system
- 201.: Strap
- 202.: Retractor
- 203.: Upper anchor
- 204.: Lower end of strap
- 205.: Intermediate strap area
- 206.: Upper end of strap
- 210.: Pillar
- 211.: Body
- 1.: First turret
- 2.: Second turret
- 3.: Contact rail
- 4.: Smooth contact surface
- 5.: Threading mean
- 6.: First protrusion
- 7.: Second protrusion
- 8.: Access
- 9.: Retention space
- 10.: Holding mean

### Brief description of the figures

Figure 1 shows an embodiment of the finish panel facing the body of a vehicle pillar comprising a three-point seat belt system pre-installed in the body.
Figure 2 shows an embodiment of the internal face of the finish panel comprising a holding mean according to the present invention.
Figure 3 shows a detailed embodiment of the holding mean according to the present invention.

### Detailed description of the invention

The object of the present invention is to improve the assembly of the seat belt system (200) on a pillar (210) of a vehicle.

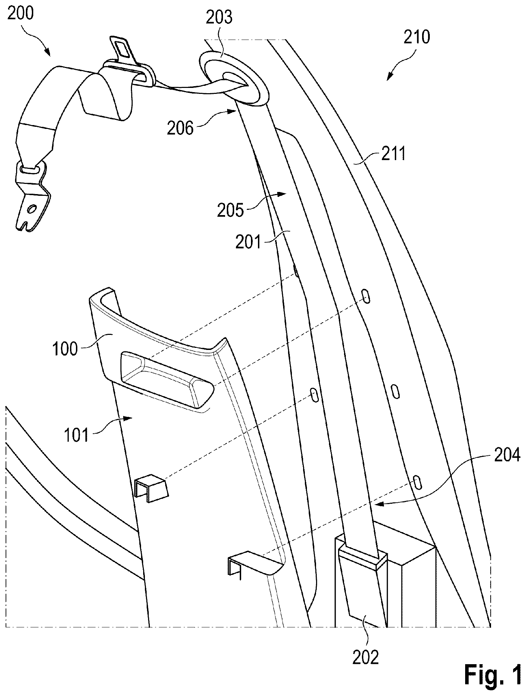

Figure 1 shows a seat belt system (200) in a pre-assembly situation with respect to the pillar (210) of a vehicle. It can be seen that this seat belt system (200) includes a retractor (202) assembled in a lower area of the body (211) of said pillar (210), as well as an upper anchor (203) assembled in an upper area of said body (211). A strap (201) of the seat belt system (200) runs from the retractor (202), where the lower end (204) of the strap (201) is located, to the upper anchor (203), where the upper end (206) of the strap (201) is located. Said upper anchor (203) performs the function of forwarding the upper end (206) of the strap (201) towards the interior of the vehicle's passenger compartment.

In order to give the interior a correct visual appearance, the body (211) of the pillar (210) is covered by a plastic finish panel (100), which is fixed, for example by clips, to the body (211), as represented by the dashed lines.

As can be seen in Figure 1, the presence of a seat belt system (200), and in particular the strap (201), can interrupt the correct union of the finish panel (100) with the body (211) of the pillar (210), as the intermediate strap area (205) of the strap (201) is pinched between the mounting clips and their respective holes in the body (211), limiting its movement. In such cases, the seat belt system (200) does not fulfill its function, since the strap (201) cannot be wound and unwound during its displacement, making its use impossible.

As can be seen in Figure 1, during the assembly of the finish panel (100) with the body (211) of the pillar (210), the operator does not have direct visual contact with the strap (201), which is hidden by the finish panel (100).

To this end, in a first aspect of the invention, a finish panel (100) for a pillar (210) of a vehicle is described.

The finish panel (100) comprises an outer face (101) and an internal face (102), where said internal face (102) comprises connecting means (103) configured to retain the finish panel (100) to a body (211) of the pillar (210) of the vehicle, said connecting means (103) comprising a first and a second turret (1, 2) configured to retain fixing clips for mechanical attachment to the body (211).

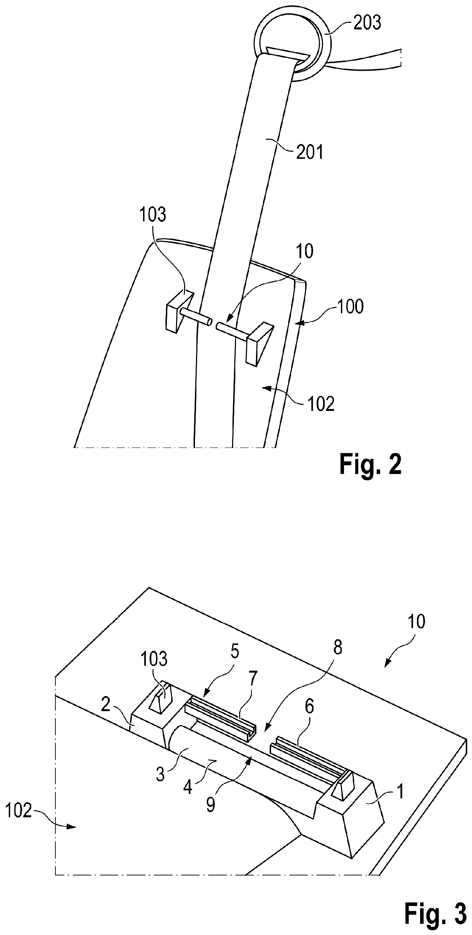

Unlike other previous solutions, as can be seen in Figure 2 and Figure 3, the finish panel (100) also comprises a holding mean (10) configured to contact and retain the strap (201) of the seat belt system (200) during the sliding movement of said strap (201) with respect to the finish panel (100) when the strap (201) is being rolled up or unrolled.

Said holding mean (10) is arranged on the internal face (102) of the finish panel (100), between the first and second turret (1, 2). In this way, the holding mean (10) in turn comprises: a contact rail (3) and a threading mean (5).

The contact rail (3) is arranged adjacent to the internal face (102) of the finish panel (100) between the first and second turrets (1, 2) and configured to make contact with the strap (201) of the seat belt system (200) during its displacement movement. This contact prevents the strap (201) from coming into contact with other elements of the internal face (102) of the finish panel (100), such as sharp elements, edges, or elements for stiffening the finish panel (100).

For its part, the threading mean (5) comprises a first and a second protrusion (6, 7) arranged, respectively, in the first and second turret (1, 2), facing each other, and said first and second protrusions (6, 7) extend towards the opposite turret (1, 2), said first and second protrusions (6, 7) being arranged separately from the internal face (102) of the finish panel (100) generating a retention space (9) between said first and second protrusions (6, 7) and the contact rail (3), such that the first and second protrusions (6, 7) are configured to retain the strap (201) in the retention space (9), and where the threading means (5) also defines an access (8) arranged between said first and second protrusions (6, 7) configured to introduce the strap (201) into the retention space (9).

Furthermore, the holding mean (10) and the first and second turret (1, 2) form a single body with the finish panel (100), which facilitates its manufacture and installation.

Figure 3 shows a detailed view of one embodiment of the holding mean (10) of Figure 2. This particular embodiment of the holding mean (10) comprises a contact rail (3) with a smooth surface (4) protruding from the internal face (102) of the finish panel (100). This smooth surface (4) is designed to come into contact with the strap (201). As previously indicated, the pillar (210) of a vehicle is somewhat concave towards the lower part of the interior of the vehicle, causing the strap (201) to tend to come into contact with the internal face (102) of the finish panel (100). The presence of a contact rail (3) that protrudes from said internal face (102) and, in addition, has a smooth surface (4) makes it possible to reduce the friction between both components, thus reducing the wear of the strap (201) during its displacement and improving the haptic sensation for the user. In this sense, the use of a rounded contact rail (3) is preferable. Additionally, the contact rail (3) can extend from the first turret (1) to the second turret (2). The configuration of a rounded contact rail (3) reduces the aforementioned friction and, therefore, increases the useful life of the strap (201).

As can be seen in Figure 3, the access (8) in the threading mean (5) is arranged equidistant from the first and second turret (1, 2). The length of this access (8) is such that it allows the entry of the strap (201) into the retention space (9) generated in the holding mean (10). Consequently, the length of said access (8) is greater than the thickness of the strap (201).

On the other hand, the arrangement of the holding mean (10) is independent of other characteristics. Thus, the holding mean (10), in a particular embodiment of the solution, is arranged in a substantially intermediate position between an upper end and a lower end of said finish panel (100). Additionally, the holding mean (10) can be aligned with the first and second turret (1, 2). That is to say, the holding mean (10) and the first and second turret (1, 2) can be arranged aligned in the same substantially intermediate position of the finish panel (100).

An example of the realization of a holding mean (10) according to the present invention may comprise the contact rail (3), with the smooth surface (4), preferably rounded, which runs from the first turret (1) to the second turret (2), achieving a good contact surface with the strap (201) during its displacement, and additionally, said holding means (10) may comprise said threading means (5), where the first and second protrusions (6, 7) define an access (8) equidistant from the first and second turrets (1, 2). Thus, this particular holding means (10) may be arranged in an intermediate position of the finish panel (100). As shown in Figure 3, the connecting means (103) are mechanically separated from the retention space (9) in such a way that, when the strap (201) is arranged inside said retention space (9), it is impossible for said strap (201) to come into contact with the connecting means (103).

In a second aspect of the invention, the invention relates to a vehicle pillar assembly.

As can be seen in Figure 1, said pillar assembly comprises: a body (211) of the pillar (210), a finish panel (100) according to the aspect of the invention described above, and a seat belt system (200).

The seat belt system (200) in turn comprises a strap (201), a retractor (202) configured to wind and unwind the strap (201), and an upper anchor (203) configured to guide the sliding of the strap (201). The retractor (202) of the seat belt system (200) is arranged in a lower area of the pillar (210), while the upper anchor (203) is arranged in an upper area of said pillar (210).

For its part, the finish panel (100) is configured to cover the body (211) of the pillar (210), so that the holding mean (10) is arranged between the retractor (202) and the upper anchor (203) of the seat belt system (200).

In a particular embodiment of the assembly, the interior finish panel (100) has a concavity towards the lower part of the interior of the vehicle, that is to say, it comprises a curved geometry from its upper end to its lower end, such that the upper end of said interior finish panel (100) is arranged closer to the opposite interior finish panel (100) of the vehicle than the lower end, and the seat belt system (200) is configured such that the strap (201) contacts the contact rail (3) of the holding mean (10) in any position of displacement of said strap (201) during the winding or unwinding movement. Additionally, said finish panel (100) comprises a contact rail (3) such that said contact rail (3) is configured to be the single point of contact between the finish panel (100) and the strap (201) of the seat belt system (200).

In another particular embodiment of the assembly, the connecting means (103) of the finish panel (100) comprise a clip arranged at the distal end of the first and second turret (1, 2) of the holding mean.

In another particular embodiment of the assembly, the retractor (202) and the upper anchor (203) are fixed to the body (211) of the pillar (210). Unlike current solutions, this fixing can be carried out independently of the installation of the interior finish panel (100) without the inclusion of an additional piece as a guide that forces the simultaneous assembly of said guide and the seat belt system (200). This translates into an improvement in the vehicle assembly line.

On the other hand, the finish panel (100) may or may not be configured in turn as a set of elements.

Thus, in a particular embodiment, the finish panel (100) is a single component that extends from the upper end, adjacent to the upper anchor (203), to the lower end, adjacent to the retractor (202).

Alternatively, in another particular embodiment, the finish panel (100) may be made up of at least two components. According to this embodiment, there is an upper component and a lower component. Each of these upper and lower components is fixed to the body (211) of the pillar (210) and, specifically, the holding mean (10) is arranged on the internal face (101) of the lower component, in an area close to its upper end.

In a third aspect of the invention, the invention refers to the method of mounting a finish panel (100) on a pillar (210) comprising a pillar assembly as described above. Said method comprises the following steps:
- placing a finish panel (100) with the internal face (102) facing the body (211) of a pillar (210),
- inserting the strap (201) through the access (8) so that the strap (201) is retained in the retention space (9) by the holding means (10) of the finish panel (100), and
- attaching the finish panel (100) to the body (211) of the pillar (210).

Unlike current solutions, the seat belt system (200) can be pre-installed on the pillar assembly. Thus, in a particular embodiment of the method, a stage of pre-assembly of said seat belt system (200) to the body (211) of the pillar (210) is carried out, prior to the stage of arranging a finish panel (100) facing the internal face (102).

In this sense, the retractor (202) can be fixed to the body (211), preferably in the lower part of the pillar (210). For its part, the upper anchor (203) is fixed to the upper part of the body (211) of the pillar (210) with the strap (201) passing through the said upper anchor (203). The result of this arrangement is that the strap (201) is turned upside down so that it can be used as a diagonal seat belt, holding the vehicle user's chest crosswise. The concavity in the pillar (210) causes the strap (201) to come into contact with the finish panel (100) once it is attached to the body (211).

Therefore, the development of the present invention makes it easier for the fitter of the finish panel (100) to be certain of the arrangement of the strap (201) of the seat belt system (200), preventing the strap (201) from being pinched during the process of attaching the finish panel (100).

## Claims

1.- A finish panel for a pillar of a vehicle, where the finish panel (100) comprises an outer face (101) and an internal face (102), where said internal face (102) comprises connecting means (103) configured to retain the finish panel (100) to a body (211) of the pillar (210) of the vehicle, said connecting means (103) comprising a first and a second turret (1, 2) configured to retain fixing clips for mechanical attachment to the body (211);
**characterized in that** the finish panel (100) also includes a holding mean (10) configured to contact and retain a strap (201) of a seat belt system (200) during the sliding movement of said strap (201) with respect to the finish panel (100) when said strap (201) is being wound or unwound, said holding means (10) being arranged on the internal face (102) and between the first and second turret (1, 2), where the holding means (10) in turn comprises:
- a contact rail (3) arranged adjacent to the internal face (102) of the finish panel (100) between the first and second turret (1, 2) and configured to make contact with the strap (201) of the seat belt system (200) during its displacement movement, and
- a threading mean (5) comprising a first and a second protrusion (6, 7) arranged, respectively, on the first and second turret (1, 2), facing each other, and said first and second protrusions (6, 7) extending towards the opposite turret (1, 2), said first and second protrusions (6, 7) being arranged apart from the internal face (102) of the finish panel (100) generating a retention space (9) between said first and second protrusions (6, 7) and the contact rail (3), such that the first and second protrusions (6, 7) are configured to retain the strap (201) in the retention space (9), and where the threading means (5) also defines an access (8) arranged between said first and second protrusions (6, 7) configured to introduce the strap (201) into the retention space (9),
where the holding means (10) and the first and second turret (1, 2) form a single body with the finish panel (100).

2. The finish panel according to claim 1, where said contact rail (3) comprises a smooth surface (4) protruding from the internal face (102) of the finish panel (100).

3. The finish panel according to any of the preceding claims, where the access (8) is arranged equidistant from the first and second turret (1, 2).

4. The finish panel according to any of the preceding claims, where the holding mean (10) is arranged in a substantially intermediate position between an upper end and a lower end of said finish panel (100).

5. The finish panel according to claim 4, where the holding means (10) and the first and second turrets (1, 2) are arranged aligned in the same substantially intermediate position of the finish panel (100).

6. The finish panel according to any of the preceding claims, where the contact rail (3) extends from the first turret (1) to the second turret (2).

7. A vehicle pillar assembly, **characterized in that** it comprises:
- a body (211) of the pillar (210),
- an interior finish panel (100) according to any of claims 1 to 6, where the interior finish panel (100) is configured to cover the body (211) of the pillar (210), and
- a seat belt system (200), which in turn comprises a strap (201), a retractor (202) configured to wind and unwind said strap (201), and an upper anchor (203) configured to guide the sliding of the strap (201);
where the retractor (202) is arranged in a lower area of the pillar (210) and the upper anchor (203) is arranged in an upper area of the pillar (210).

8. A pillar assembly according to claim 7, where the holding mean (10) is arranged between the retractor (202) and the upper anchor (203).

9. A pillar assembly according to any one of claims 7 to 8, where the finish panel (100) comprises a concavity towards the lower part of the interior of the vehicle, and the seat belt system (200) is configured such that the strap (201) contacts the contact rail (3) of the holding mean (10) in any position of displacement of said strap (201) during the winding or unwinding movement.

10. A pillar assembly as claimed in claim 9, wherein the contact rail (3) is configured to be the sole point of contact between the finish panel (100) and the strap (201).

11. A pillar assembly according to any one of claims 7 to 10, where the retractor (202) and the upper anchor (203) are fixed to the body (211) of the pillar (210).

12. A pillar assembly as claimed in any one of claims 7 to 11, wherein the finish panel (100) is a single component extending from the upper end adjacent the upper anchor (203) to the lower end adjacent the retractor (202).

13. A pillar assembly according to any one of claims 7 to 11, where the finish panel (100) is made up of two components, an upper component and a lower component, each of said upper and lower components being fixed to the body (211) of the pillar (210), and where the holding mean (10) is arranged on the internal face (102) of the lower component, in an area close to its upper end.

14. A method of mounting a finish panel on a pillar comprising a pillar assembly according to any one of claims 7 to 13, comprising the following steps:
- placing a finish panel (100) with the internal face (102) facing the body (211) of a pillar (210),
- inserting the strap (201) through the access (8) so that the strap (201) is retained in the retention space (9) by the holding means (10) of the finish panel (100), and
- attaching the finish panel (100) to the body (211) of the pillar (210).

15. The method of assembling a finish panel according to claim 14, where the method comprises a stage of pre-assembling a seat belt system (200) to the body (211) of the pillar (210) prior to the stage of arranging the finish panel (100).
